# EUROPEAN PATENT APPLICATION

(11) **EP 1 342 502 A1**
(43) Date of publication of application: **10.09.2003**
(21) Application number: 01974847.4
(22) Date of filing: 15.10.2001
(51) Int. Cl.: B01J 20/02, B01J 20/20, G01N 30/48

(54) **PARTICULATE SUPPORT FOR SEPARATION/PURIFICATION OR EXTRACTION AND PROCESS FOR PRODUCING THE SAME**

(30) Priority: 18.10.2000 JP 2000318337
(71) Applicant: Toyo Kohan Co., Ltd., Tokyo 102-8447 (JP)
(72) Inventor: TANGA, Michifumi, c/o TOYO KOHAN CO., LTD, Kudamatsu--shi, Yamaguchi 744-8611 (JP); OKAMURA, Hiroshi, c/o TOYO KOHAN CO., LTD, Kudamatsu-shi, Yamaguchi 744-8611 (JP); TAKAGI, Kenichi, c/o TOYO KOHAN CO., LTD, Kudamatsu-shi, Yamaguchi 744-8611 (JP); WATANABE, Kimitsuna, Setagaya-ku, Tokyo 154-0014 (JP); SUZUKI, Tsutomu, Kashiwa-shi, Chiba 277-0882 (JP); TAKAHASHI, Kojiro, Hiroshima-shi, Hiroshima 734-0015 (JP)
(74) Representative: VOSSIUS & PARTNER
(86) International application number: JP0109024
(87) International publication number: WO02032568

(57) **Abstract**

For the purpose or providing a particulate support capable of adsorbing a target substance highly specifically at a high density and at greatly elevated recovery efficiency, and a process of separation/purification or extraction. The particulate support is made of a carbonaceous material and/or a carbide and is for use in the separation/purification or extraction of substances related to biological organisms, while the process of separation/purification or extraction of substances related to biological organisms is conducted using the particulate support.

## Description

### Technical Field

The present invention relates to a particulate support preferable for the separation/purification or extraction of substances related to biological organisms, such as nucleic acids including DNA and RNA, protein, sugars, and low-molecular organic compounds with hydrophobicity, and a process of producing the same.

In accordance with the invention, the term "substances related to biological organisms" means constituent components of biological organisms, such as nucleic acids including DNA and RNA, protein, sugars, and low-molecular organic compounds with hydrophobicity.

### Background of the Invention

Particulate solid-phase supports for immobilizing adsorbents and absorbents thereon have been known so far, including well-known silica particle. Because the densities of substances related to biological organisms as immobilized on the surfaces of these supports when used are low, the efficiency of the recovery of the substances related to biological organisms is so low that an extended period of time is required for the recovery. Thus, processes using these supports are not simple.

As described in JP-A-11-313670, for example, there have been used a process of adsorbing and separating nucleic acids on a support prepared by allowing the surface of a silica particle including magnetic substance to contain polyacrylamide, as well as a process of separating nucleic acids with specific nucleotide sequences including a step of forming hybrids of the nucleic acids with a support prepared by immobilizing oligonucleotides via amide bonding on the surface of a non-porous organic polymer particle.

However, these processes cause non-specific adsorption or lower adsorption levels on the surface of these supports. Therefore, it has been demanded to improve the efficiency of the recovery of substances related to biological organisms.

It is an object of the invention to overcome the problems so far as described above. Specifically, it is an object of the invention to provide a particulate support with high adsorption specificity and a high adsorption density of a target substance and with greatly elevated recovery efficiency, and a process of producing the same.

### Disclosure of the Invention

The present inventors have made investigations so as to achieve the object. The inventors have found that the surface of a particulate of a carbonaceous material and/or a carbide or the surface of a particulate prepared by coating the surface of a ceramic particle or a magnetic particle with a carbonaceous material and/or a carbide can specifically immobilize substances related to biological organisms thereon at a high density and can therefore remarkably elevate the recovery efficiency.

For the production of such particulate support, further, the inventors have found that via the chemical modification of the particulate surface, the amount immobilized can further be elevated.

The invention has been based on these findings.

In a first aspect, the invention provides a particulate support of a carbonaceous material and/or a carbide, for the separation/purification or extraction of substances related to biological organisms.

Like the invention in a second aspect, the carbonaceous material may be one or a combination of plural materials as selected from the group consisting of diamond, amorphous carbon, amorphous carbon and graphite.

Like the invention in a third aspect, further, the carbide may be one or a combination of plural carbides as selected from the group consisting of silicon carbide, tungsten carbide and/or titanium carbide.

Like the invention in a fourth aspect, additionally, the diamond can be diamond and/or non-diamond carbon. Such particulate support in accordance with the invention as described in a fifth aspect can be prepared by coating the surface of a ceramic particle or a magnetic particle with the carbonaceous material and/or the carbide.

Like a sixth aspect in accordance with the invention, in this case, the ceramic particle may be one or a combination of plural ceramic as selected from the group consisting of silica, alumina and/or silicon carbide.

Like a seventh aspect in accordance with the invention, the thickness of the coating of the carbonaceous material and/or the carbide is preferably 1 nm or more.

Like an eighth aspect in accordance with the invention, then, the surface of the carbonaceous material and/or the carbide is preferably chemically modified so that a polar group may be arranged at the end.

In a ninth aspect of the invention, further, nucleic acid and/or protein is preferably immobilized on the surface of the carbonaceous material and/or the carbide.

In a tenth aspect, the particulate support of the invention as described above can be produced in a simple manner by a process of producing particulate support, including a step of chemically modifying the surface of the carbonaceous material and/or the carbide so that a polar group may be arranged at the end.

In an eleventh aspect, the step of chemical modification so that a polar group may be arranged at the end in the process of producing particulate support preferably includes the hydrogenation treatment, chlorination treatment, amination treatment and carboxylation treatment of the surface of the carbonaceous material and/or the carbide.

In a twelfth aspect, in other words, the step of chemical modification so that a polar group may be arranged at the end preferably includes the hydrogenation treatment of the surface of the carbonaceous material and/or the carbide, the chlorination treatment of the surface thereof via ultraviolet irradiation in chlorine gas, the amination treatment via ultraviolet irradiation in ammonia gas and the carboxylation treatment by the reaction in a non-aqueous solvent with carboxylic acid chloride, and a neutralization treatment.

In a thirteenth aspect, the process of producing particulate support in accordance with the invention can be done by carrying out the step of chemical modification so that a polar group may be arranged at the end in a fluid tank-type photoreactor including a vacuum container, a glass filter arranged in a removable manner on the vacuum container, a quartz glass plate outside the vacuum container, a high-pressure mercury arc lamp outward the quartz glass plate, a tube to pass chlorine, argon gas and ammonia therethrough, a tube drawing air to vacuum, and valves for controlling the flow into tubes.

### Brief Description of the Drawings

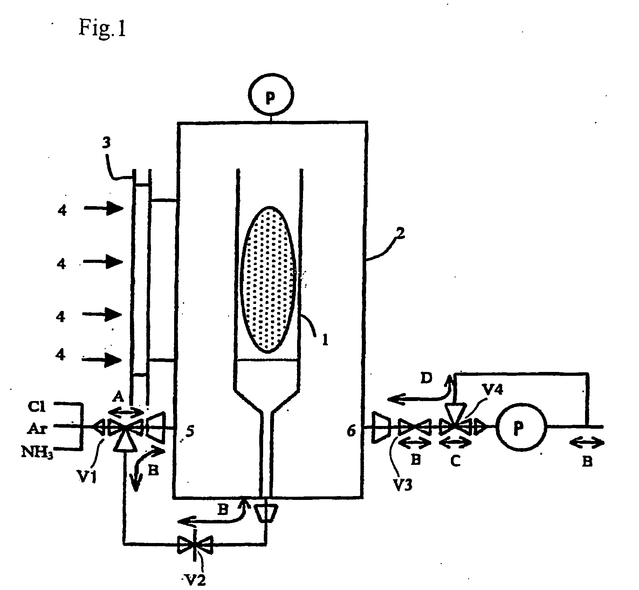

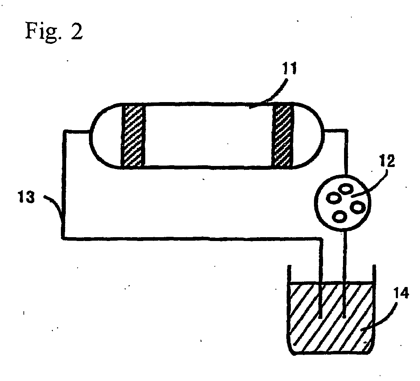

Fig.1 is a cross sectional view of the fluid tank-type photoreactor. Fig.2 is a schematic view of an apparatus for determining the amount of a substance immobilized on the surface of diamond particle.

### Best Mode for Carrying out the Invention

The invention is now described in more detail hereinbelow.

In the first aspect of the invention, the constituent element of the particulate support of the invention is composed of a carbonaceous material and/or a carbide.

The carbonaceous material means carbon atoms bonded to metals and the like via covalent bonding and includes for example one or a combination of plural materials as selected from the group consisting of diamond, amorphous carbon, amorphous carbon and graphite, as described in the second aspect.

Specifically, diamond with a far higher immobilization density is preferable.

In the fourth aspect, the diamond is diamond and/or non-diamond carbon.

As the diamond, any of synthetic diamond, diamond prepared at high pressure or natural diamond can be used. Additionally, the structures thereof may be single crystal or polycrystal. In view of productivity, diamond produced by gas-phase synthetic processes such as microwave plasma CVD is preferably used.

As the non-diamond carbon, any of graphite, amorphous carbon or diamond-like carbon can be used.

The term carbide means compounds of carbon with elements more positive than carbon and includes for example one or a combination of plural carbides as selected from the group consisting of silicon carbide, tungsten carbide and/or titanium carbide, as described in the third aspect of the invention.

As in the fifth aspect, the particulate support of the invention can be prepared by coating the surface of a ceramic particle or a magnetic particle with the carbonaceous material or the carbide.

The term ceramic particle means particles made of a material ceramic, and includes for example particles of silica, alumina and silicon carbide, as described in the sixth aspect.

The term magnetic particle means particles of materials with magnetism. Preferably, a magnetic particle with a property such that the magnetic particle can exert strong magnetism under a magnetic field when given but loses the magnetism when the magnetic field is out, namely with paramagnetism is preferably used.

The magnetic particle includes for example ferrite of spinnel type or bran bite type and alloys with the main components iron, nickel, and cobalt.

In this case, the thickness of the coating is 1 nm or more as described in the seventh aspect, preferably 1 nm to 1,000 nm.

Below 1 nm, substantially, the coating effect cannot be exerted. Above 1,000 nm, on the other hand, the top surface of the substantial coating layer is used. Thus, it is inefficient in terms of labor and cost.

Coating with the carbonaceous material and/or the carbide can be done by known methods. For example, the coating can be done by for example microwave plasma CVD, ECRCVD, IPC, direct current sputtering, ECR sputtering, ion plating, arc ion plating, EB deposition, resistance heating deposition and slurry coating.

The range of the mean particle size of the particulate support is preferably 1 to 5,000 µm. Outside the range, reaction efficiency such as the separation density and separation rate during separation/purification or extraction is so poor unpreferably in terms of the retention of the intensity.

Preferably, the surface of the particulate support of the invention is intentionally made rough. Such rough surface can have increased surface area of the substrate, preferably, so that enormous amounts of DNA and the like can be immobilized.

In the particulate support of the invention, preferably, the surface of the carbonaceous material and/or the carbide is chemically modified so that a polar group may be arranged at the end, so as to readily immobilize substances related to biological organisms on the surface of the substrate.

The polar group includes for example hydroxyl group, carboxyl group, sulfate group, cyano group, nitro group, thiol group, amino group, epoxy group and active ester group. The polar group can be immobilized through a hydrocarbon group with zero to 12 carbon atoms, preferably zero to 6 carbon atoms on the surface of the carbonaceous material and/or the carbide.

When the polar group is carboxyl group, for example, monocarboxylic acids such as formic acid, acetic acid and propionic acid, dicarboxylic acids such as oxalic acid, malonic acid, succinic acid, maleic acid, and. fumaric acid, polycarboxylic acids such as trimellitic acid are bound on the surface of the carbonaceous material and/or the carbide. Preferably, oxalic acid and succinic acid are bound thereon. Such chemical modifications can be immobilized through peptide bonding or ester bonding or the like on the surface of the carbonaceous material and/or the carbide.

As described in the ninth aspect, the particulate support of the invention can immobilize nucleic acids and/or protein on the surface of the carbonaceous material and/or the carbide thereon.

After the surface of the carbonaceous material and/or the carbide is chemically modified by the process, nucleic acids such as DNA and RNA and/or protein binding to a target substance related to biological organisms can be immobilized thereon.

The nucleic acids to be immobilized can be selected from DNA, RNA, polynucleotides and the like, appropriately, depending on the substance related to biological organisms to be intentionally separated/purified. The origin is not specifically limited. Naturally occurring nucleic acids from higher animals, higher plants, fungi, bacteria, and virus as well as artificially modified nucleic acids and synthetic polynucleotides can also be used. The chain length is not specifically limited but is preferably 4 to 50 kb, from the standpoint of simple procedure.

Nucleic acids not only single-stranded but also double-stranded can be immobilized.

In case of double strands, at least one end is preferably a cohesive end, so as to immobilize the double strands strongly in a simple manner.

In case that the surface of the carbonaceous material and/or the like is chemically modified, at least one end has two or more nucleotides with primary amine, for intense immobilization via amide bonding with the active ester group for chemical modification.

Typical examples of the nucleotide with primary amine include adenine (A), cytosine (C) and guanine (G). Specifically, adenine (A) or guanine (G) is preferable.

The method for immobilizing double-stranded DNA with two or more nucleotides with primary amine at their end is now exemplified.

A first method is for obtaining complementary DNA by reverse transcription from mRNA, using a primer with two or more nucleotides with primary amine at 5' end.

As the primer, a nucleotide with primary amine at 5' end, preferably with two or more adenine (A) molecules and/or guanine (G) molecules can be used.

A second method is for amplifying (a specific template DNA) by PCR using a primer with two or more nucleotides with primary amine at 5' end.

As the primer, a nucleotide with primary amine at 5' end, preferably a set of primers with two or more adenine (A) molecules and/or guanine (G) molecules is prepared.

A third production method includes the reaction of DNA to be intentionally immobilized with restriction enzymes such as EcoRI with a specific cleavage activity to a site where two or more nucleotides with primary amine exist in sequence.

A fourth method is for directly adding a nucleotide with primary amine at the end to a blunt-ended polynucleotide.

Further, the protein to be immobilized can be selected appropriately, depending on the substance related to biological organisms to be separated or purified. When the substance related to biological organisms is for example an enzyme, the substrate can be selected. For an antibody, the antigen or hapten can be selected.

As described in the tenth aspect, a process including a step of chemically modifying the surface of the carbonaceous material and/or the carbide so that a polar group may be arranged at the end can produce the particulate support of the invention.

The process of chemically modifying the surface of the carbonaceous material and/or the carbide so that a polar group may be arranged at the end includes a process including a step of the oxidation of the surface of the carbonaceous material and/or the like with oxygen plasma and a subsequent step of vapor treatment; a process including a step of the hydrogenation treatment of the surface of the carbonaceous material and/or the like, a step of ultraviolet irradiation in chlorine gas to chlorinate the surface of the carbonaceous material and/or the like, and a subsequent step of hydrolysis in an alkaline solution for hydroxylation; a process including a step of the oxidation of the surface of the carbonaceous material and/or the like with oxygen plasma, a subsequent step of chlorination and hydrolysis in an alkali solution for hydroxylation; a process including a step of the hydrogenation treatment of the surface of the carbonaceous material and/or the like, a subsequent step of ultraviolet irradiation in chlorine gas to chlorinate the surface of the carbonaceous material and/or the like, and a step of the reaction in a non-aqueous solvent with soda carboxylate; and the like.

In case of the presence of hydroxyl group on the surface of the carbonaceous material, furthermore, treatment with silane coupling agents, titanium coupling agents, and aluminium coupling agents is progressed thereon, so that the chemical modification is more intense.

In case that the polar group is carboxyl group, the most preferable step for chemical modification is preferably the hydrogenation process of the surface of the carbonaceous material and/or the carbide, the chlorination process thereof, the amination process thereof and the carboxylation process thereof, as described in the eleventh aspect.

As in the twelfth aspect, in more detail, a method is preferable, including the hydrogenation treatment of the surface of the carbonaceous material and/or the like, ultraviolet irradiation in chlorine gas to chlorinate the surface of the carbonaceous material and/or the like, ultraviolet irradiation in ammonia gas for amination, reaction in a non-aqueous solvent with carboxylic acid chloride and neutralization in a solution of weak alkalinity.

As in the thirteenth aspect, such chemical modification can be done by carrying out the step of chemical modification so that a polar group may be arranged at the end in a fluid tank-type photoreactor including a vacuum container, a glass filter arranged in a removable manner on the vacuum container, a quartz glass plate outside the vacuum container, a high-pressure mercury arc lamp outward the quartz glass plate, a tube to pass chlorine, argon gas and ammonia therethrough, a tube drawing air to vacuum, and valves for controlling the flow into tubes.

One example of the fluid tank-type photoreactor is shown in Fig.1.

The apparatus of Fig.1 is equipped with vacuum container 2 including glass filter 1 therein. Glass filter serves as a part to place a carbonaceous material and/or a carbide to be intentionally modified chemically therein and is arranged in a removable manner from the vacuum container 2.

High-pressure mercury arc lamp 4 is arranged through quartz glass plate 3 outside the vacuum container 2, so that ultraviolet irradiation on the inside of the vacuum container can be done structurally.

In the vacuum container 2 are arranged tube 5 through which chlorine, argon gas (Ar) and ammonia can pass, and tube 6 drawing air in the inside of the vacuum container to vacuum. These tubes are under controls with three-way valve V1, valve V2, valve V3 and three-way valve V4.

When the photoreactor of Fig.1 is used, hydrogenation, chlorination and amination can be done while the carbonaceous material and/or the carbide can be left in the glass filter 1 with no need of taking out the carbonaceous material and/or the carbide from the vacuum container 2. Additionally, the carbonaceous material and/or the carbide together with the glass filter 1 can be taken out and can be carboxylated in a simple manner.

The particulate support of the invention can be used for the separation/purification or extraction of substances related to biological organisms.

In other words, substances related to biological organisms, such as DNA, RNA, protein, sugars and low-molecular organic compounds with hydrophobicity in a reaction solution are adsorbed on the particulate support and are then separated or purified from the solution. Furthermore, a target substance can be obtained by solubilizing DNA and the like from the particulate support, on which DNA and the like have preliminarily been adsorbed.

Other than separation/purification or extraction, the particulate support can be used for various assay methods for the analysis of substances related to biological organisms and the like and can be used also as a support for separation tools of substances related to biological organisms by affinity chromatography.

One example of the method to use the particulate support of the invention for the separation/purification or extraction of substances related to biological organisms is as follows:
Using the particulate support of the invention and mixing the particulate support with a sample containing a substance related to biological organisms and adsorbing the nucleic acid in the sample onto the particulate support, the nucleic acid can be extracted from the particulate support with aqueous NaOH solution or hot water.

### Examples

### Example 1 (Diamond particulate support)

Using the photoreactor shown in Fig.1, the particulate support was produced by the following procedures.

### (1) Hydrogenation of the surface of diamond particle

Diamond particle (particle size of 30 µm; manufactured by Osaka Diamond Co., Ltd.) was treated at 900 °C in hydrogen atmosphere for 3 hours, for hydrogenation.

### (2) Chlorination and amination of the surface of the diamond particle

Opening the vacuum container in the apparatus of Fig.1 and taking out the glass filter, the diamond particle hydrogenated above in (2) was placed therein. Setting the glass filter in the vacuum container, the lid was closed.

Adjusting the three-way valve V1 to flow passage B, the valve V2 was opened. Opening the valve V3, further, the three-way valve V4 was adjusted to flow passage C, to vacuum the inside of the vacuum container.

Closing the valve V3 and adjusting the three-way valve V1 to flow passage A, Ar flowed in the vacuum container to adjust the inside of the container to 1.1 atm. Subsequently, the flow of Ar was stopped. Opening the valve V3, the inside of the vacuum container was vacuumed.

The procedure of allowing Ar to flow in the vacuum container was repeated three times.

Closing the valve V3 and adjusting the three-way valve V4 to flow passage D, chlorine flowed to adjust the inside of the container to 1.1 atm. Subsequently, the flow of chlorine was stopped. Opening the valve V3 and again starting the flow of chlorine, a high-pressure mercury arc lamp irradiated the diamond particle for 5 minutes, while the diamond particle was flowing in chlorine gas. Stopping the flow of chlorine, the three-way valve V4 was adjusted to flow passage C, for vacuuming.

The procedure of allowing Ar to flow in the vacuum container was repeated three times.

Closing the valve V3, the three-way valve V4 was adjusted to flow passage D. Ammonia flowed to adjust the inside of the vacuum container to 1.1 atm. The flow of ammonia was stopped. The valve V3 was opened. Again starting the flow of ammonia, a high-pressure mercury arc lamp irradiated the diamond particle for 30 minutes, while the diamond particle was flowing. Stopping the flow of ammonia, the three-way valve V4 was adjusted to flow passage C, for vacuuming. Closing the valve V3, and opening the flow of Ar and opening the lid of the vacuum container, the sample together with the glass filter was taken out.

### (3) Carboxylation of the surface of the diamond particle

The glass filter of the apparatus of Fig.1 was arranged in an aspiration bottle with a cock, where 10 vol. % succinic acid chloride and 1,4-dioxane solution were charged, for 15-min immersion. Subsequently, the cock was opened to aspirate succinic acid chloride. Thereafter, the diamond particle was rinsed sequentially with 1,4-dioxane three times and with aqueous 10 wt % potassium carbonate solution three times and additionally rinsed with water three times. The resulting diamond particle was dried.

### (4) Evaluation of the separation performance for substance related to biological organisms

The separation/purification or extraction performance of the resulting particulate support for substances related to biological organisms was evaluated with an apparatus for evaluating the amount immobilized, as shown in Fig.2. The immobilizing apparatus of Fig.2 includes cell 11 for placing therein a particulate support for evaluation, pump 12 for circulating solution, tube 13 and container 14 for solution.

### 1) Activation

1-mL carboxylated diamond particle was placed in the cell 11 of the apparatus for evaluating the amount immobilized. A solution of the following composition was charged under pressure into the cell 11 with pump 12. The diamond particle was left to stand therein at ambient temperature for 30 minutes, for activation.

| Solution | |
|---|---|
| N-Hydroxysuccinimide | 20 mM |
| 1-[(Dimethylamino)propyl] 3-ethylcarbodiimide | 0.1 M |
| Phosphate buffer, pH 6 | 0.1 M |

### 2) Immobilization of oligonucleotide

An aqueous sterile 10 nm/mL solution of an oligonucleotide (see SQ ID No.1 in the sequence listing) was charged under pressure into the cell with the pump. The diamond particle was left to stand therein at ambient temperature for 2 hours, to immobilize the oligonucleotide.

### 3) Hybridization of complementary oligonucleotide

An aqueous sterile 10 nm/mL solution of an oligonucleotide (see SQ ID No.2 in the sequence listing) with its C terminus modified with Cy3 (manufactured by Amersham-Pharmacia Biotech Co., Ltd.) was circulated in the cell with the pump for 60 minutes. Subsequently, the cell was rinsed with sterile water three times.

### 4) Dehybridization of complementary oligonucleotide and assay

An aqueous 0.3 M NaOH solution at 60 °C was circulated in the cell, to allow the complementary oligonucleotide to dehybridize.

The fluorescence intensity (570 nm) of Cy3 was assayed and calculated on a concentration basis, to determine the amount immobilized per 1 mL-diamond particle.
Consequently, the amount immobilized on the particulate support was 5 × 10⁴ pmol/mL.

### Example 2 (Production of DLC particulate support)

In the same manner as in Example 1 except for the use of diamond-like carbon (DLC) particle in place of the diamond particle, a particulate support was produced. The amount immobilized on the particulate support was similarly evaluated.

Consequently, the amount immobilized on the particulate support was 5 × 10³ pmol/mL.

### Example 3 (Production of graphite particulate support)

In the same manner as in Example 1 except for the use of graphite particle in place of the diamond particle, a particulate support was produced. The amount immobilized on the particulate support was similarly evaluated.
Consequently, the amount immobilized on the particulate support was 1 × 10³ pmol/mL.

### Example 4 (Production of carbide particulate support)

In the same manner as in Example 1 except for the use of carbide particle in place of the diamond particle, a particulate support was produced. The amount immobilized on the particulate support was similarly evaluated.
Consequently, the amount immobilized on the particulate support was 1 × 10³ pmol/mL.

### Comparative Example (Commercially available product)

Using a commercially available particulate support ("Avidin-Sepharose" manufactured by Amersham-Pharmacia Biotech Co., Ltd.) produced by binding avidin onto a cellulose support, the amount immobilized on the particulate support was evaluated in the same manner as in Example 1.

Consequently, the amount immobilized on the particulate support was 5 × 10² pmol/mL.

The above results indicate that the particulate support of the invention is at a high immobilization density of substances related to biological organisms, compared with the commercially available product.

### Industrial Applicability

The particulate support of the invention is at a high immobilization density of substances related to biological organisms with less non-specific adsorption. Therefore, the particulate support of the invention is useful for use in the separation/purification or extraction of substances related to biological organisms.

Further, the particulate support of the invention can be produced in a simple manner by. the production process in accordance with the invention.

The particulate support of the invention when used can achieve highly efficient recovery of substances related to biological organisms for a short time. Thus; the particulate support of the invention is useful in medical fields for diagnosis of disease and in individual fields of biochemistry and molecular biology for research works.

## Claims

1. A particulate support of a carbonaceous material and/or a carbide, for the separation/purification or extraction of substances related to biological organisms.

2. A particulate support according to claim 1, where the carbonaceous material is one or a combination of plural materials as selected from the group consisting of diamond, amorphous carbon, amorphous carbon and graphite.

3. A particulate support according to claim 1 or 2, where the carbide is one or a combination of plural carbides as selected from the group consisting of silicon carbide, tungsten carbide and/or titanium carbide.

4. A particulate support according to claim 2, where the diamond is diamond and/or non-diamond carbon.

5. A particulate support according to claims 1 to 4, where the carbonaceous material and/or the carbide is coated on the surface of a ceramic particle or a magnetic particle.

6. A particulate support according to clam 5, where the ceramic particle is one or a combination of plural ceramic as selected from the group consisting of silica, alumina and/or silicon carbide.

7. A particulate support according to claim 5 or 6, where the thickness of the coating of the carbonaceous material and/or the carbide is 1 nm or more.

8. A particulate support according to any one of claims 1 to 7, where the surface of the carbonaceous material and/or the carbide is chemically modified so that a polar group may be arranged at the end.

9. A particulate support according to any one of claims 1 to 8, where nucleic acid and/or protein is immobilized on the surface of the carbonaceous material and/or the carbide.

10. A process of producing a particulate support according to claims 1 to 9, including a step of chemically modifying the surface of the carbonaceous material and/or the carbide so that a polar group may be arranged at the end.

11. A process of producing a particulate support according to claim 10, where the step of chemical modification so that a polar group may be arranged at the end includes the hydrogenation treatment, chlorination treatment, amination treatment and carboxylation treatment of the surface of the carbonaceous material and/or the carbide.

12. A process of producing a particulate support according to claim 10, where the step of chemical modification so that a polar group may be arranged at the end includes the hydrogenation treatment of the surface of the carbonaceous material and/or the carbide, the chlorination treatment of the surface thereof via ultraviolet irradiation in chlorine gas, the amination treatment via ultraviolet irradiation in ammonia gas, the carboxylation treatment by the reaction in a non-aqueous solvent with carboxylic acid chloride, and a neutralization treatment.

13. A process of producing a particulate support according to any one of claims 10 to 12, where the step of chemical modification so that a polar group may be arranged at the end is carried out in a fluid tank-type photoreactor including a vacuum container, a glass filter arranged in a removable manner on the vacuum container, a quartz glass plate outside the vacuum container, a high-pressure mercury arc lamp outward the quartz glass plate, a tube to pass chlorine, argon gas and ammonia therethrough, a tube drawing air to vacuum, and valves for controlling the flow into tubes.
